(19) **Europäisches Patentamt**

**European Patent Office**

**Office européen des brevets**

(11) Publication number : **0 487 461 A2**

# (12) EUROPEAN PATENT APPLICATION

(21) Application number : **91830392.6**

(22) Date of filing : **25.09.91**

(51) Int. Cl.$^5$ : **H01B 17/00**

(30) Priority : **19.11.90 IT 2209990**

(43) Date of publication of application :
**27.05.92 Bulletin 92/22**

(84) Designated Contracting States :
**AT BE CH DE DK ES FR GB GR LI LU NL SE**

(71) Applicant : **ITALCO S.P.A.**
**Contrada Tesino 181-B**
**Offida (Ascoli Piceno) (IT)**

(72) Inventor : **Balestrieri, Francesco Paolo**
**Via Piave 20/12**
**I-20080 Vermezzo Milano (IT)**

(74) Representative : **Righetti, Giuseppe**
**Bugnion S.p.A. Via Carlo Farini, 81**
**I-20159 Milano (IT)**

(54) **Modular insulating terminal for electric cables.**

(57)   The described terminal comprises at least one hollow member (9a, 9b) formed with a cylindrical portion (10) and a portion (11) of truncated conical form in coaxial relation. The frusto-conical portion (11) has an annular projection (13) at the inside thereof which is coaxial with the cylindrical portion (10) as well. The inner diameter of the projection (13) is the same as the outer diameter of the cylindrical portion (10) so that it can engage with the cylindrical portion of another hollow member ; the hollow member (9a, 9b) is made of elastomeric material containing mineral fillers in order to increase its dielectric constant.

FIG.1

EP 0 487 461 A2

The present invention relates to a modular insulating terminal for covering one end of an electric cable, said end exhibiting an outer sheath, a metal screen projecting from the outer sheath, a semi-conductive screen projecting relative to the metal screen, a primary insulating member projecting relative to said semi-conductive screen and a primary conductor projecting from said primary insulating member.

It is known that in order to connect the ends of two cables in an electric line it is necessary to remove from the two ends the coating protecting the primary conductor designed to carry electric energy.

These coatings are usually comprised of an outer sheath, a metal screen consisting of possible ground wires parallel to the primary conductor, a semi-conductive screen and ultimately a primary insulating member which is directly in contact with the primary conductor.

The different coatings are removed in succession so that each inner coating can project a certain amount relative to the immediately following outer coating, as far as the primary conductor end that must be left bare and to which a lug will be subsequently connected by known means is reached.

In particular, the ground wires of the metal screen are folded back over the outer sheath in order to be subsequently connected to the zero potential. Subsequently one or more insulating members are fitted onto the end of each cable and their length must be sufficient to cover the portion included between the bare primary conductor and the metal screen.

A terminal of the type normally used essentially comprises one or more cylindrical hollow insulanting members made of elastomeric material or another material performing a real protecting function. Located within this cylindrical insulating member and intimately coupled thereto is an annular element made of an appropriate material other than the material used for the cylindrical insulating member, which performs the function of controlling the electric field in the end area of the semi-conductive screen.

This type of terminal has the drawback of being irreparably damaged when an electric discharge caused by overvoltages higher than the voltage boundary values for which the semi-conductive screen has been planed occurs.

These overvoltages for example can be essentially due to lightnings or to requests of electric power greater than expected on the part of the loads disposed on the line. The discharges generated by these overvoltages tend to reach the zero potential, that is the metal screen, following the easier path.

In case of lightnings the discharge develops starting from the lug, passes externally of the cable and reaches the metal screen, piercing the lug and tearing the semi-conductive screen.

On the contrary, in case of power requests greater than expected, the discharge starts from the primary conductor and perforates the primary insulating member and semi-conductive screen reaching the metal screen.

In any case the discharge develops heat at very high temperature thereby irreparably damaging the terminal and coatings which will not be able to perform the respective protecting and insulating functions any longer.

Therefore when a discharge occurs it is necessary to switch the current off so as to disconnect the line for the purpose of avoiding still greater damages and carrying out the necessary repairs. In order to bring these repairs into effect it is necessary first of all to localize the fault, remove the terminals and the end coatings of the damaged cables, prepare the electric cable ends anew in the manner previously described and put new terminals on.

Obviously, this interruption which is necessarily long is very troublesome for the users. The economic disadvantages resulting from the use of this type of terminal in case of damages caused by electric discharges are therefore well apparent.

Another drawback present in known art terminals resides in that their mounting to an electric cable is difficult. Actually, these terminals are currently of an important length so that it is difficult to fit them onto the cable by forced fitting.

Another drawback of known terminals is represented by the fact that it is necessary to manufacture different molds in order to achieve as many terminals of different lengths for the different voltages applied to the conductors. The accomplishment of several different molds involves high production costs.

Another problem arises due to the fact that the coupling between the two different materials forming the cylindrical hollow member and annular element for controlling the electric field must not exhibit air-containing separation areas or cavities. In fact the air present therein could ionize thereby accelerating the material decay. In order to avoid this occurence it is necessary to carry out qualitative controls on the produced terminals. These controls and the inevitable discarding of products result in an increase in the production costs.

Consequently, it is an object of the present invention to solve the problems of the known art by a terminal capable of withstanding electric discharges and susceptible of easy mounting.

The above object is achieved by providing a terminal made of a particular material and having an appropriate geometric shape so that the discharge is deviated externally of the cable without damaging the terminal and the coatings wrapping the primary conductor.

The foregoing and further objets that will become more apparent in the following description are achieved by a modular insulating terminal for covering one end of an electric cable, characterized in that it comprises at least one hollow member formed with a substantially cylindrical portion provided with at least a substantially radial outer enlargement and in that said member is made of an elastomeric material containing mineral fillers to increase the conductivity, resistance and dielectric constant thereof. Said hollow member will cover the end of said electric cable at least over a portion thereof included between the metal screen and the end of the semi-conductive screen.

Further features and advantages will be best understood from the detailed description of a preferred embodiment of an insulating terminal for conductors in accordance with the present invention, given hereinafter by way of non-limiting example with reference to the accompanying drawings, in which:

- Fig. 1 is a partly sectional side view of a terminal in accordance with the invention, consisting of a plurality of hollow members mounted to the ends of an electric cable;

- Fig. 2 is an axial section of one of the hollow members forming the modular insulating terminal shown in Fig. 1;

- Fig. 3 shows an alternative embodiment of the hollow member shown in Fig. 2.

Referring to the drawings, the modular insulating terminal of the invention is generally identified by reference numeral 1.

Said terminal is disposed on one end 2 of an electric cable which has been previously prepared in the usual manner so that a primary conductor 3 joined to a lug 4 projects over a certain portion thereof from a primary insulating member 5 which in turn projects relative to a semi-conductive screen 6. The screen 6 projects relative to a metal screen 7 formed for example of ground wires 7a, and ultimately said metal screen projects relative to an outer sheath 8 on which the metal screen 7 is folded over.

Terminal 1 is comprised of one or more hollow members denoted by 9a, 9b. Said hollow members cover the end 2 of the cable at least over a portion thereof included between the metal screen 7 and the end of the semi-conductive screen 6. Each hollow member 9a, 9b has a substantially cylindrical hollow portion 10 and a substantially radial enlargement 11 of hollow truncated conical form coaxial with the cylindrical portion 10. The major base of said frusto-conical enlargement 11 constitutes one of the two ends of terminal 1 and is preferably provided with a cylindrical end-piece 12.

Provided within the frusto-conical enlargement 11 is an annular projection 13 which is an extension of the cylindrical portion 10. The inner diameter of the annular projection 13 is substantially the same as the outer diameter of said cylindrical portion 10, so that the annular projection 13 can engage by restrained fixing the end of the cylindrical portion 10 of the consecutive hollow member 9a.

Each hollow member 9a, 9b is made of an elastomeric material containing mineral fillers preferably consisting of silicon carbide and barium titanate. Silicon carbide and barium titanate perform the function of increasing the dielectric constant of the elastomeric material. In addition, silicon carbide also increases the conductivity of the material in order to deviate the discharge.

The percent amounts of the silicon carbide and barium titanate contained in the elastomeric material vary depending upon the type of the elastomeric material adopted. Generally however the ratio between the silicon carbide and barium titanate amounts is provided to substantially correspond to 1.5. For example, in a preferedd embodiment ethylene-propylene terpolymer (EDPM) is used as the elastomeric material to which silicon carbide is added in a proportion of 30% and barium titanate in a proportion of 20%.

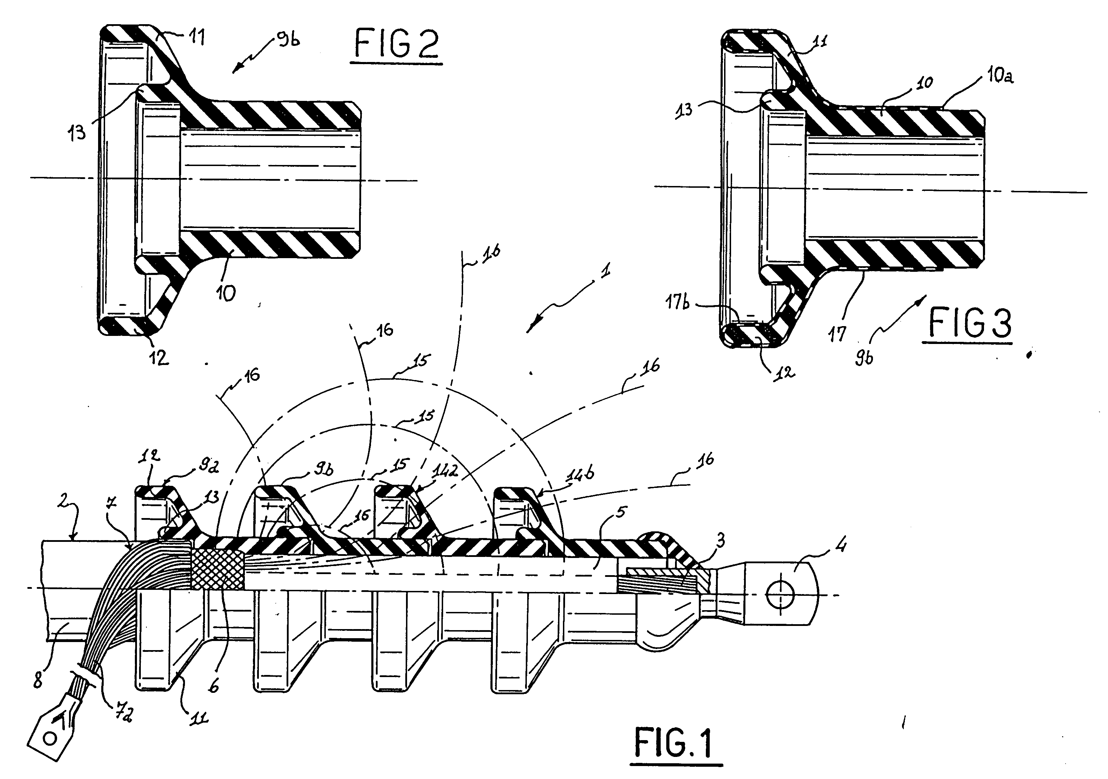

As shown in the embodiment of Fig. 3, the outer surface of each hollow member 9a and 9b can be covered with a protecting coating 17 made of an insulating material in order to protect said member against weather agents. Said protecting coating 17 has an end edge 10b spaced apart a predetermined amount from the free edge of the cylindrical portion 10, said amount preferably corresponding to the length of the inner cylindrical surface of the annular projection 13. In this manner there is no solution of electric continuity between the hollow member 9a and hollow member 9b when the two members are in mutual engagement.

The inner surface of the frusto-conical enlargement 11 is also provided to be covered with an additional protective coating 17b made of insulating material.

The protective coating 17 and additional protective coating 17b are preferably made of elastomeric material of the same nature as the elastomeric material used for the hollow members 9a and 9b. Alternatively, the protective coatings 17, 17b can even consist of fat that can be manually applied to the involved surfaces when the terminal is being set up.

Referring particularly to Fig. 1, terminal 1 also comprises additional hollow members 14a, 14b which are similar in geometrical shape to the hollow members 9a and 9b but differ from the latter due to the fact that they do not contain mineral fillers.

The hollow members 9a, 9b and additional members 14a, 14b are fitted in succession onto the end 2 of an electric cable so that they come into engagement one after the other, as shown in Fig. 1.

The behaviour of terminal 1 described above mainly as regards its structure is as follow in case of a discharge.

In the presence of an overvoltage caused by a power request greater than expected or by a lightning, the discharge substantially propagates from the lug 4 trying to reach the zero potential represented by the metal screen 7. Advantageously, the hollow members 9a, 9b deviate and keep the discharge externally of the electric cable by virtue of their geometrical shape and contents of mineral fillers. The hollow elements 9a, 9b are in fact responsible, due to their peculiar features, for the deformation undergone by the lines of force 15 and equipotential surfaces 16 of the electric field, which deformation enables the discharge to be deviated.

Therefore the discharge is forced to follow such a path that it reaches the zero potential "skipping" the semi-conductive screen 6, thereby avoiding damaging it.

In addition, the holes that may be formed in the frusto-conical enlargements 11 due to the passage of a discharge are very small relative to the sizes of the radial portions themselves. In this way the protective function of the whole terminal is not impaired.

It will be also recognized that, due to the presence of said mineral fillers and in particular of barium titanate, the localized heating caused by the discharge passage gives rise to a further increase in the dielectric constant of the material, thereby improving the practical behaviour of terminal 1.

The present invention attains the intended purposes.

In fact terminal 1 offers an improved protection for the electric cables as compared with known terminals.

In case of discharge, thanks to this type of terminal, the power supply is exclusively switched off for the time necessary to the automatic intervention of the protection devices conventionally installed along the line and therefore it can be re-established almost immediately without being necessary to replace or repair any terminals.

In addition, since the terminal in question is comprised of several elements of reduced sizes, it can be easily carried and mounted to the electric cable. Specifically, this operation is particularly easy since the individual elements can be easily fitted onto the electric cable and engaged thereto one after the other so as to accomplish a terminal of appropriate length depending upon the voltage applied to the primary conductor 3.

Therefore, by virtue of the modular structure of this terminal, these elements can be produced using a single mold for electric cables of same section.

Obviously modifications and variations may be made to the invention as conceived, all of them falling within the scope of the inventive idea characterizing it.

In particular, the peculiar operating features and advantages of the present invention can also be achieved through geometric shapes different from those described above, also depending upon the intended use.

## Claims

1. A modular insulating terminal for covering one end of an electric cable, said end exhibiting an outer sheath (8), a metal screen (7) projecting from the outer sheath (8), a semi-conductive screen (6) projecting relative to the metal screen (7), a primary insulating member (5) projecting relative to said semi-conductive screen (6) and a primary conductor (3) projecting from said primary insulating member (5), characterized in that it comprises at least one hollow member (9a, 9b) formed with a substantially cylindrical portion (10) provided with at least a substantially radial outer enlargement (11) and in that said member is made of an elastomeric material containing mineral fillers to increase the conductivity, resistance and dielectric constant thereof, said at least one hollow member (9a, 9b) covering the end (2) of said electric cable at least over a portion thereof included between the metal screen (7) and the end of the semi-conductive screen (6).

2. A terminal according to claim 1, characterized in that said mineral fillers consist of silicon carbide and barium titanate.

3. A terminal according to claim 2, characterized in that silicon carbide and barium titanate are added to the elastomeric material in a proportion of 30% and 20% respectively.

4. A terminal according to claim 2, characterized in that the ratio between the silicon carbide and barium titanate amounts is substantially equal to 1.5.

5. A terminal according to claim 1, characterized in that said enlargement (11) is of hollow truncated conical form and is coaxial with said cylindrical portion (10).

6. A terminal according to claim 5, characterized in that the major base of said frusto-conical enlargement (11) constitutes one of the two ends of said terminal (9a, 9b).

7. A terminal according to claim 6, characterized in that the major base of said frusto-conical enlargement is provided with a cylindrical end-piece (12).

8. A terminal according to claim 1, characterized in that it comprises an annular projection (13) disposed consecutively to said cylindrical portion (10), the inner diameter of said annular projection being substantially the same as the outer diameter of the cylindrical portion (10) so that said projection can engage the end of the cylindrical portion (10) of another hollow member (9a).

9. A terminal according to claim 1, characterized in that the outer surfaces of said hollow member (9a, 9b) are covered with a protecting coating (17) made of insulating material.

10. A terminal according to claim 9, characterized in that said protecting coating (17) has an end edge (10b) spaced apart from the free edge of the cylindrical portion (10).

11. A terminal according to claim 9, characterized in that it further comprises an additional protecting coating (17b) of insulating material applied to the inner surface of the frusto-conical enlargement (11).

12. A terminal according to claim 1, characterized in that it further comprises at least one additional hollow member (14a, 14b) made of elastomeric material, similar in geometric shape to said hollow members (9a, 9b), and disposed consecutively to the latter in spaced apart relationship with the metal screen.

FIG 3

FIG 2

FIG.1